Europäisches Patentamt

European Patent Office

Office européen des brevets

(11) Numéro de publication : **0 294 303 B1**

# (12) FASCICULE DE BREVET EUROPEEN

(45) Date de publication du fascicule du brevet :
15.04.92 Bulletin 92/16

(51) Int. Cl.⁵ : **H04M 19/08**

(21) Numéro de dépôt : **88420179.9**

(22) Date de dépôt : **02.06.88**

(54) **Circuit pour poste téléphonique incorporant une protection contre les surcharges de tension.**

(30) Priorité : **05.06.87 FR 8707946**

(43) Date de publication de la demande :
**07.12.88 Bulletin 88/49**

(45) Mention de la délivrance du brevet :
**15.04.92 Bulletin 92/16**

(84) Etats contractants désignés :
**CH DE FR GB IT LI NL SE**

(56) Documents cités :
**FR-A- 2 538 661**
**US-A- 4 636 588**

(73) Titulaire : **SGS-THOMSON**
**MICROELECTRONICS S.A.**
**7, Avenue Galliéni**
**F-94250 Gentilly (FR)**

(72) Inventeur : **Dabin, Emmanuel**
**6, Rue Soffrey Calignon**
**F-38500 Voiron (FR)**

(74) Mandataire : **de Beaumont, Michel et al**
**1bis, rue Champollion**
**F-38000 Grenoble (FR)**

Jouve, 18, rue Saint-Denis, 75001 PARIS

## Description

La présente invention concerne les circuits électriques internes des postes téléphoniques d'abonné.

Ces circuits sont connectés à une extrémité d'une ligne téléphonique bifilaire dont l'autre extrémité est reliée à un central téléphonique desservant plusieurs lignes semblables.

Ces circuits internes du poste d'abonné sont conçus pour accomplir différentes fonctions, parmi lesquelles :

– la réception d'un signal de sonnerie envoyé par le central,

– l'émission d'un signal indiquant que le combiné du poste a été décroché,

– l'émission de signaux de conversation et la réception de signaux de conversation,

– l'émission de signaux de numérotation pour appeler un autre abonné identifié par ces signaux.

Ces fonctions doivent être accomplies sans défaut dans des conditions de fonctionnement qui peuvent varier beaucoup d'un poste à l'autre, notamment en fonction de la distance entre le poste et le central et en fonction du niveau de la tension d'alimentation de la ligne (l'alimentation du poste est faite par le central à travers la ligne).

De plus, les différentes fonctions doivent être exécutées sans erreur même dans certaines conditions de fonctionnement anormales, et si elle ne peuvent pas être exécutées dans ces conditions anormales, il faut en tout cas que les circuits du poste soient protégés pour ne pas être détruits par ces conditions anormales.

Une des conditions anormales que le poste doit supporter sans destruction est la mise en contact accidentelle d'un des conducteurs de la ligne téléphonique avec un conducteur du réseau électrique de distribution d'énergie domestique ; ce réseau transporte en général une énergie sous une tension de 220 volts efficaces.

C'est pourquoi les circuits internes des postes téléphoniques comportent en général plusieurs protections contre ces conditions de fonctionnement anormales (c.f. par exemple FR-A- 2 538 661).

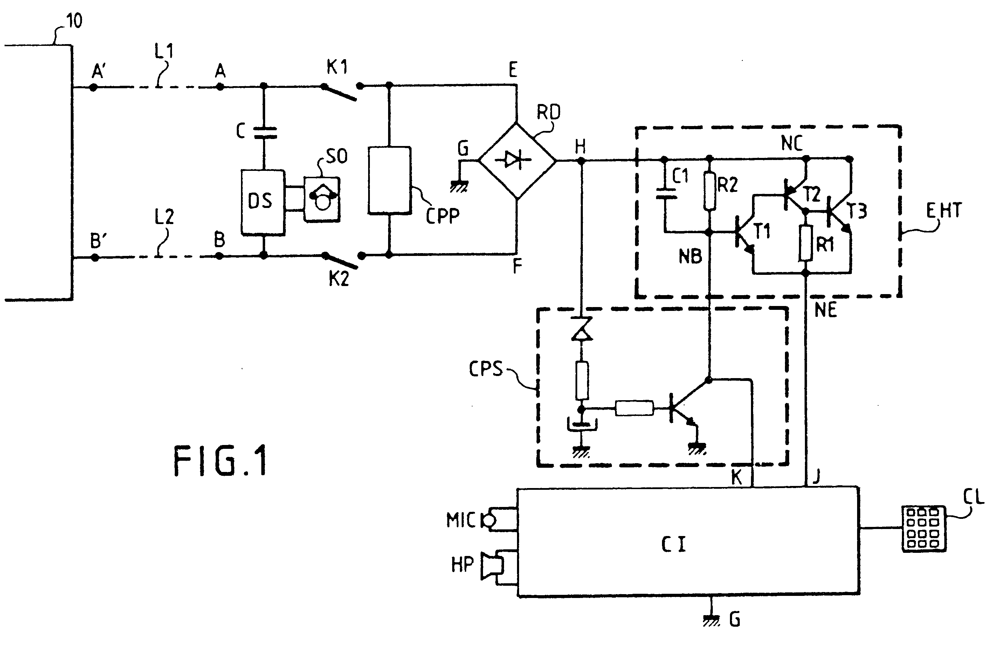

Un exemple de constitution de circuit est représenté à la figure 1.

Le circuit comporte deux bornes d'entrée A et B reliées chacune à l'un des conducteurs L1, L2 d'une ligne téléphonique bifilaire reliée par ailleurs à deux bornes A', B' d'un central téléphonique 10.

Le circuit du poste d'abonné comporte les éléments principaux suivants :

– un circuit de détection de sonnerie DS connecté à travers un condensateur C entre les bornes A et B et apte à détecter la présence d'un signal de sonnerie envoyé sur la ligne par le central ; ce circuit commande alors l'actionnement d'une sonnerie électronique ou électromécanique SO. Le circuit de détection de sonnerie peut être protégé par un composant non représenté placé entre les bornes A et B (zener bidirectionnelle).

– en aval du circuit de détection de sonnerie DS on trouve un interrupteur K1 relié à la borne A et un interrupteur K2 relié à la borne B ; ces interrupteurs isolent de la ligne, lorsqu'ils sont ouverts, l'ensemble des circuits du poste à l'exception du circuit DS et du condensateur C qui restent en permanence connectés à la ligne ; les interrupteurs s'ouvrent lorsque le combiné est raccroché, ils se ferment lorsqu'on décroche le combiné.

– un pont redresseur RD possède deux bornes d'entrée E, F et deux bornes de sortie G, H ; la borne E est reliée à l'interrupteur K1, la borne F à l'interrupteur K2 ; la borne G constitue la masse électrique commun des circuits du poste, la borne H constitue à la fois la borne d'alimentation de ces circuits et une borne par laquelle transitent les signaux en provenance du central et à destination du central (conversation, numérotation, signal de décrochage du combiné).

– un circuit ou un composant de protection primaire CPP est connecté entre les bornes E et F pour limiter à environ 100 volts efficace la tension reçue par le pont redresseur en cas de surcharge accidentelle en provenance de la ligne.

– un ou plusieurs circuits intégrés conçus pour exécuter les différentes fonctions du poste (à l'exception de la détection du signal de sonnerie) ; ce ou ces circuits traitent les signaux de conversation issus d'un microphone MIC ; ils émettent des signaux de conversation sur un haut-parleur HP ; ils produisent des signaux de numérotation sous la commande d'un cadran ou d'un clavier de numérotation CL. Un circuit unique CI a été représenté.

– un étage EHT dit "étage haute-tension" est interposé entre la borne H de sortie du pont redresseur RD et une borne d'entrée J du circuit-intégré, cet étage ayant notamment pour rôle de limiter la tension maximale appliquée au circuit-intégré qui ne pourrait pas supporter directement la tension de l'ordre de 50 à 100 volts qui peut se présenter en fonctionnement normal en sortie du pont redresseur RD. Le circuit-intégré est alimenté entre la borne J et la masse G.

– enfin un circuit de protection secondaire CPS est connecté entre la borne H et la masse G ; il limite la puissance consommée par l'étage haute-tension en cas de surcharge, en imposant une limitation du courant consommé par l'étage haute tension.

Une des fonctions importantes du circuit-intégré CI (en combinaison d'ailleurs avec l'étage haute-tension EHT qui l'alimente) est d'assurer une régulation de la tension sur la borne J et du courant qui circule de l'étage haute-tension vers la borne J. En effet, les signaux de numérotation ainsi que le signal de décrochage du combiné sont en fait constitués par l'existence ou non d'un courant continu supérieur à un seuil déterminé sur la ligne téléphonique. Ce courant est le courant consommé par le poste et c'est essentiellement celui qui passe de l'étage haute-tension vers la borne J du circuit-intégré.

Etant donné que le courant consommé par le poste dépend de la tension reçue entre les bornes E et F et que cette tension dépend à la fois de la tension d'alimentation du central (qui peut varier dans d'assez larges proportions) et de l'impédance de la ligne (qui varie aussi dans de larges proportions selon la longueur de la ligne), le circuit-intégré doit réguler à la fois le courant et la tension au point J pour les maintenir dans un gabarit bien déterminé pour chaque phase de fonctionnement du poste (phase de réception d'un appel, phase de décrochage à la suite d'un appel, phase de décrochage en vue d'appeler, phase de conversation). A cet effet, le circuit-intégré comporte une borne de sortie K agissant sur la polarisation de l'étage haute-tension pour limiter le courant consommé.

La présente invention s'intéresse particulièrement à ce qui se passe dans une phase de décrochage du combiné en présence d'une surcharge de tension sur la ligne.

En pratique, les normes sont les suivantes :

1) gabarit d'arrêt d'appel en "demandé" :

au décrochage du combiné en réponse à un appel, le poste doit se mettre à consommer un courant moyen non nul. Ce courant moyen sera détecté par le central qui, au plus tard 150 millisecondes après cette détection, devra interrompre le signal de sonnerie pour se mettre en phase de conversation. Dans les cas de lignes courtes, le courant moyen devra être au moins égal à 30 milliampères.

2) phase de conversations :

lorsque la phase de conversation est établie, le courant crête consommé (et non le courant moyen) doit être inférieur à 60 milliampères.

3) décrochage en "demandeur" :

au décrochage du combiné pour appeler un correspondant, le poste doit se mettre à consommer un courant moyen pour que le central puisse le détecter et se préparer à recevoir un signal de numérotation ; au bout de 400 millisecondes on passe en phase de numérotation et le courant crête pendant cette phase ne doit pas excéder 70 milliampères. Enfin,

après la mise en communication de l'appelant et de l'appelé on se trouve encore en phase de conversation où le courant crête ne doit pas excèder 60 milliampères.

De manière générale des limitations de courant sont nécessaires pour répondre à ces normes, mais de plus, des limitations sont utiles pour éviter une consommation de puissance excessive en présence de surtensions.

Comme il faut dans certains cas (lignes courtes) consommer un courant moyen d'au moins 30 milliampères au décrochage du combiné en présence d'un signal de sonnerie, on s'aperçoit que l'on ne peut imposer une limitation de courant crête au-dessous de 110 milliampères.

On prévoira donc que le circuit-intégré CI établit une limitation de courant crête à 110 ou 120 milliampères mais pas au-dessous pendant 400 millisecondes environ après le décrochage du combiné (c'est-à-dire après la mise sous tension du circuit-intégré CI). De cette manière, le gabarit d'arrêt d'appel en demandé peut être respecté. Puis, au bout de 400 millisecondes, le circuit-intégré limitera le courant à 60 mA soit pour la numérotation, soit pour la conversation.

S'il y a une surcharge de tension sur la ligne en phase de décrochage du combiné, cette surcharge sera limitée à environ 100 volts efficaces par le composant de protection primaire CPP, et elle donnera lieu à une consommation de puissance d'environ 6 watts pendant environ 400 millisecondes, puis environ 3 watts ensuite.

Ces puissances sont trop élevées et exigent des transistors coûteux dans l'étage haute-tension EHT.

On a déjà proposé de limiter la dissipation de puissance crête supplémentaire au bout d'une durée supérieure à 400 millisecondes ; cette limitation est faite par le circuit de protection secondaire CPS visible à la figure 1.

Ce circuit est réalisé à partir de composants extérieurs au circuit-intégré CI (diode zener, résistances, capacité, transistor) ; il agit sur la polarisation de l'étage haute-tension pour limiter à environ 30 mA le courant crête consommé ; ce circuit n'agit qu'en cas de surcharge et après un certain délai suivant l'application d'une surcharge de tension.

Le délai est calculé largement pour être nettement supérieur à 400 millisecondes malgré la dispersion des valeurs des résistances et capacités du circuit CPS. De cette manière, le circuit de protection ne perturbe pas la phase de décrochage du combiné en demandé. En pratique on est amené à prévoir un délai moyen de plusieurs secondes pour tenir compte de cette dispersion des composants.

Par conséquent, une puissance de 3 watts peut être dissipée pendant plusieurs secondes, après dissipation d'une puissance de 6 watts pendant 400 millisecondes.

Cette consommation de puissance est trop élevée et la présente invention propose de la réduire au moyen d'un circuit de protection secondaire incorporé au circuit-intégré CI assurant les fonctions principales du poste, ce circuit de protection limitant à une première valeur le courant consommé par l'étage haute-tension pendant une première durée après le décrochage du combiné, puis à une deuxième valeur inférieure à la première après cette première durée, et enfin limitant le courant à une troisième valeur inférieure à la deuxième après une deuxième durée suivant soit la première durée si une surtension est apparue pendant la première durée, soit l'apparition d'une surtension si la première durée est déjà passée lors de cette apparition.

Plus précisément, le circuit selon l'invention comprend:

    - une première capacité et un moyen de charge de cette capacité, ce moyen étant relié à la sortie de l'étage haute tension pour charger la capacité à partir de l'apparition d'une tension d'alimentation en sortie de l'étage haute tension;

    - un premier comparateur à seuil relié à la capacité pour établir un premier signal de commande après une première durée suivant l'apparition d'une tension d'alimentation en sortie de l'étage haute tension;

    - un deuxième comparateur à seuil pour détecter la présence d'une surtension aux bornes de l'étage haute tension et fournir alors un deuxième signal de commande;

    - une deuxième capacité et un moyen de charge de cette capacité, ce moyen de charge étant inhibé en l'absence du premier signal de commande et en l'absence du deuxième signal de commande;

    - un troisième comparateur à seuil relié à la deuxième capacité pour établir un troisième signal de commande après une deuxième durée suivant le début de la charge de la deuxième capacité;

    - un moyen de limitation du courant de sortie de l'étage haute tension, recevant le premier et le troisième signal de commande et apte à limiter le courant à une première valeur en présence du premier signal de commande et à une deuxième valeur inférieure à la première en présence du troisième signal de commande.

Dans une réalisation particulière, l'étage haute tension comprend un transistor ou un groupe de transistors (montage Darlington par exemple) avec une résistance de polarisation de base de valeur élevée, un collecteur relié au pont redresseur alimentant l'étage haute tension, et un émetteur relié à la sortie de l'étage haute tension; le moyen de limitation de courant comprend alors un transistor dont la base est reliée à la sortie de l'étage haute tension, dont le collecteur est relié par une résistance à la résistance de polarisation de base, et dont l'émetteur est relié par l'intermédiaire de plusieurs diodes en série à un noeud commun; le noeud commun est relié par ailleurs par une résistance à la base du transistor constituant le moyen de limitation; les diodes peuvent être court-circuitées sous la commande des premier et troisième signaux de commande.

D'autres caractéristiques et avantages de l'invention apparaîtront à la lecture de la description détaillée qui suit et qui est faite en référence aux dessins annexés dans lesquels:

    – la figure 1, déjà décrite, représente une constitution de circuits de poste téléphonique selon l'art antérieur;

    – la figure 2 représente un schéma de principe du circuit de protection de poste téléphonique selon l'invention;

    – la figure 3 représente un schéma détaillé du circuit de protection dans un exemple particulier de réalisation.

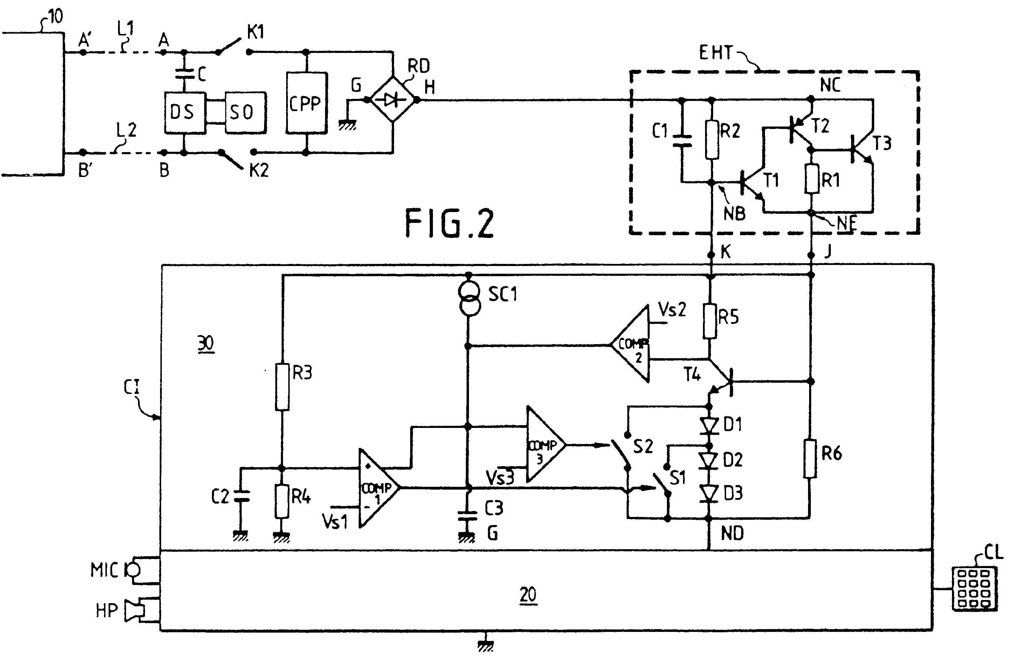

Sur la figure 2, les éléments communs avec la figure 1 sont désignés par les mêmes références. Il s'agit en particulier de tous les éléments en amont de l'étage haute tension EHT, entre le central téléphonique 10 et le pont redresseur RD.

Le circuit-intégré CI qui accomplit les fonctions principales du poste (traitement des signaux de conversation émis et reçus, numérotation, établissement des gabarits tension-courant dans les différentes phases) est alimenté par l'étage haute tension EHT et est relié au clavier ou cadran de numérotation CL, ainsi qu'au microphone MIC et au haut-parleur HP du combiné. Les fonctions principales du poste sont accomplies par une partie du circuit-intégré; cette partie est désignée par la référence 20 sur la figure 2 et est alimentée par une autre partie du circuit-intégré, désignée par la référence 30.

L'étage haute tension EHT est de préférence constitué de la manière suivante:

Il comprend un groupe de transistors T1, T2, T3 constituant un régulateur interposé entre la sortie H du pont redresseur et une borne d'alimentation J du circuit-intégré CI.

Le transistor T1, de type NPN, a son émetteur relié à un noeud commun NE de l'étage EHT; il a sa base reliée à un noeud commun NB, et son collecteur relié à la base du transistor T2, de type PNP; le transistor T2 a son émetteur relié à un noeud commun NC, et son collecteur relié d'une part à la base du transistor T3, de type NPN, et d'autre part à une résistance R1 reliée par aileurs au noeud NE; enfin, le transistor T3 a son émetteur relié au noeud NE et son collecteur relié au noeud NC.

Le noeud NE représente l'émetteur d'un transistor équivalent constitué par les trois transistors T1, T2, T3 ainsi connectés; le noeud NB représente sa base, et le noeud NC son collecteur.

Le noeud NC est relié à la borne de sortie H du pont redresseur, et le noeud NE est relié à une borne d'entrée J du circuit-intégré. Quant au noeud NB, il est relié à une autre borne d'entrée K du circuit-intégré CI.

Pour terminer la description détaillée de cet exemple de réalisation de l'étage haute tension EHT, le noeud NB est relié à la borne de sortie H du pont redresseur par une résistance de polarisation de valeur élevée R2 et une capacité C1 en parallèle sur cette résistance.

Le circuit de protection secondaire selon l'invention, qui est inséré entre les bornes J et K et la partie active du circuit-intégré CI, fait partie intégrante du circuit CI et n'est donc pas réalisé comme dans la technique antérieure à l'aide de composants extérieurs.

Ce circuit de protection comprend une première capacité C2 et un moyen de charge de cette capacité apte à charger la capacité à partir du moment où une tension d'alimentation se présente sur la borne d'alimentation J du circuit-intégré. Le moyen de charge est constitué par une résistance R3 reliée d'une part à une borne de la capacité C2 et d'autre part à la borne J; l'autre borne de la capacité C2 est reliée à la masse G.

Une résistance R4 est connectée en parallèle sur la capacité C2 pour la décharger en l'absence de tension sur la borne J.

La première borne de la capacité C2 est reliée à une entrée d'un premier comparateur à seuil qui fournit un premier signal de commande lorsque la tension aux bornes de la capacité dépasse un premier seuil Vs1.

Le circuit de protection comprend un deuxième comparateur à seuil COMP2 fournissant un deuxième signal de commande lorsque la tension sur la borne d'alimentation J excède un seuil correspondant à une surcharge VS sur la borne H. On reviendra sur le fonctionnement du comparateur COMP2.

Le circuit de protection comprend encore une deuxième capacité C3, un moyen de charge de cette capacité et un troisième comparateur à seuil COMP3.

La capacité C3 a une borne reliée à la masse G et une autre reliée au moyen de charge constitué ici par une source de courant SC1. Le comparateur COMP3 possède une entrée reliée à la deuxième borne de la capacité C3 et fournit un troisième signal de commande lorsque la tension aux bornes de la capacité C3 dépasse un seuil Vs3.

Une sortie du comparateur COMP1 est reliée à la capacité C3 pour l'empêcher de se charger tant que la charge de la capacité C1 n'est pas suffisante pour faire basculer le premier comparateur COMP1.

La sortie du deuxième comparateur COMP2 est également reliée à la capacité C3 pour l'empêcher de se charger si le deuxième comparateur n'a pas basculé, c'est-à-dire s'il n'y a pas de surtension présente sur la borne H.

Enfin, le circuit de protection secondaire comprend un moyen de limitation du courant consommé par l'étage haute tension EHT, ce moyen de limitation comprenant essentiellement un montage à transistor, à diodes, et à résistances, inséré entre les bornes J et K d'une part et le reste du circuit-intégré d'autre part. Ce moyen de limitation est commandé par le premier et le troisième comparateurs.

Dans l'exemple représenté, le moyen de limitation est constitué par un transistor T4, deux résistances R5 et R6, et trois diodes D1, D2, D3.

L'émetteur du transistor T4 est relié à l'ensemble en série des trois diodes D1, D2, D3 cet ensemble étant par ailleurs relié à un noeud commun de circuit ND par laquelle une alimentation en courant est fournie au reste du circuit-intégré. Plus précisément, l'anode de la diode D1 est reliée à l'émetteur du transistor T4 et la cathode de D3 est reliée au noeud ND.

Le collecteur du transistor T4 est relié par l'intermédiaire d'une résistance R5 au noeud NB. L'entrée du comparateur à seuil COMP2 est reliée au collecteur du transistor T4.

La base du transistor T4 est reliée au noeud NE et une résistance R6 est connectée entre les noeuds NE et ND.

Enfin, un interrupteur S1, commandé par une sortie du premier comparateur COMP1, permet de court-circuiter les diodes D2 et D3 lorsque le comparateur COMP1 bascule et fournit le premier signal de commande. Un interrupteur S2, commandé par le troisième comparateur COMP3, permet de court-circuiter les trois diodes en série D1, D2, D3 lorsque le comparateur COMP3 bascule et fournit le troisième signal de commande.

Fonctionnement du circuit

En régime de fonctionnement normal, s'il n'y a pas de surtension sur la ligne, le décrochage du combiné produit la fermeture des interrupteurs K1 et K2, et l'application sur la borne H d'une tension d'alimentation en provenance du central téléphonique (à laquelle se superpose éventuellement une composante alternative due au signal de sonnerie si le décrochage se produit à la suite d'un appel).

Dans la phase qui suit immédiatement le décrochage du combiné, on veut que le courant moyen consommé par la ligne puisse atteindre 30 milliampères, ce qui impose que le courant crête ne soit pas limité à une valeur trop faible par le moyen de limitation du courant connecté aux bornes J et K du circuit-intégré.

Par conséquent, pendant une première durée qui est de préférence de 250 millisecondes, le moyen de limitation agit pour limiter le courant crête à 120 milliampères.

La limite est fixée en fonction des valeurs des résistances R5 et R6.

Les interrupteurs S1 et S2 sont ouverts.

La durée de cette phase initiale est fixée par la constante de temps R3.C2 et le seuil Vs1; on la choisit de l'ordre de 250 millisecondes et on notera que le courant crête est limité à 120 milliampères pendant cette première durée même si une surcharge était présente sur la ligne au moment du décrochage et même si une surcharge apparaît pendant cette première durée. Aucune limitation inférieure à 120 milliampères n'est autorisée pendant cette durée; cela résulte du fait que le premier comparateur COMP1 ne bascule en aucun cas avant l'expiration des 250 millisecondes; il inhibe donc la charge de la capacité C3 et le comparateur COMP3 ne peut pas basculer lui non plus; les interrupteurs S1 et S2 ne peuvent pas se fermer.

A la fin de la première durée, le comparateur COMP1 bascule et ferme l'interrupteur S1, court-circuitant les diodes D2 et D3; en même temps, il cesse d'inhiber la charge de la capacité C3 (mais le deuxième comparateur inhibe cette charge en temps normal, c'est-à-dire s'il n'y a pas de surcharge).

Lorsque les diodes D2 et D3 sont court-circuitées, le potentiel aux bornes de la résistance R6 chute nécessairement. En effet, le transistor T4 se met à devenir plus conducteur, ce qui fait chuter le potentiel du noeud NB et ce qui réduit le courant entrant dans la borne J donc le courant circulant dans la résistance R6.

Le court-circuitage des diodes D2 et D3 agit donc bien pour réduire le courant crête consommé par le circuit. En pratique, si la jonction émetteur-base du transistor T4 est de même dimension que les jonctions des trois diodes, le courant maximal est réduit de moitié lorsque l'on court-circuite deux des diodes; il sera encore réduit de moitié lorsqu'on court-circuitera la dernière.

En l'absence de surtension sur la borne H, le courant crête est donc limité à environ 60 milliampères après la première durée de 250 millisecondes.

S'il y a une surcharge sur la ligne, le comparateur COMP2 la détecte et autorise la charge de la capacité C3; cette charge dure environ 100 millisecondes (par exemple), après quoi le troisième comparateur COMP3 bascule et ferme l'interrupteur S2, limitant la consommation de courant à une troisième valeur qui est de préférence la moitié de la précédente, c'est-à-dire 30 milliampères crête.

On comprendra que cette limitation intervient au bout d'une durée qui ne peut commencer qu'après la fin de la première durée de 250 millisecondes car on ne veut pas de cette limitation avant. Si la surcharge était présente avant ou pendant la première durée, la deuxième durée commence tout de suite après; si la surcharge se produit après, la deuxième durée ne commence qu'à l'apparition de la surcharge.

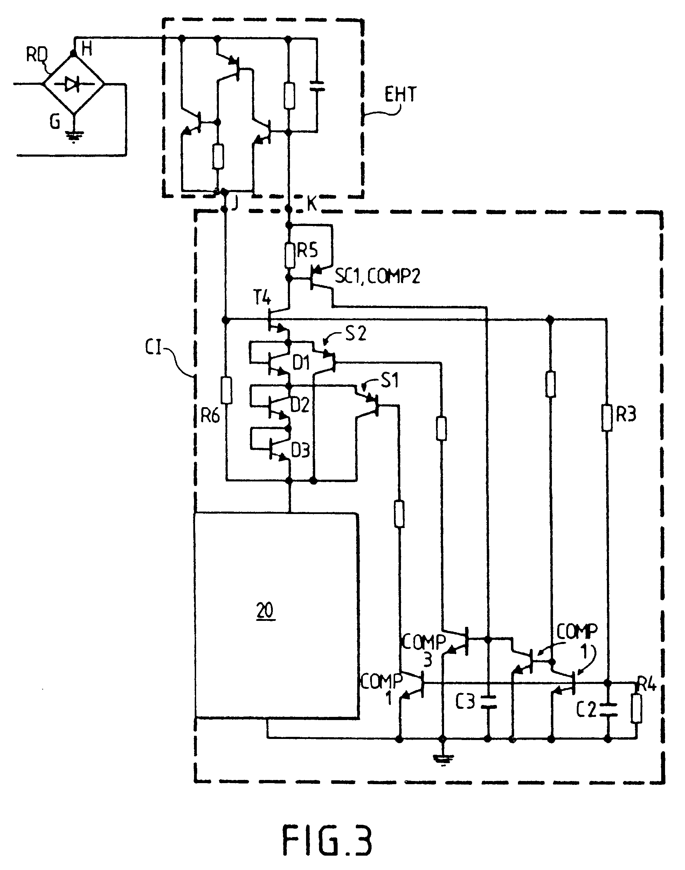

A la figure 3, on a représenté, à titre d'exemple illustratif, une réalisation détaillée en technologie bipolaire.

## Revendications

1. Circuit de protection pour poste téléphonique, destiné à assurer la protection d'un circuit-intégré (CI) alimenté par une ligne téléphonique à travers un étage haute tension (EHT), caractérisé en ce qu'il comporte:
   - une première capacité (C2) et un moyen de charge (R3) de cette capacité, ce moyen étant relié à la sortie de l'étage haute tension (EHT) pour charger la capacité à partir de l'apparition d'une tension d'alimentation en sortie de l'étage haute tension;
   - un premier comparateur à seuil (COMP1) relié à la première capacité (C2) pour établir un premier signal de commande après une première durée suivant l'apparition d'une tension d'alimentation en sortie de l'étage haute tension;
   - un deuxième comparateur à seuil (COMP2) pour détecter la présence d'une surtension aux bornes de l'étage haute tension et fournir alors un deuxième signal de commande;
   - une deuxième capacité (C3) et un moyen de charge (SC1) de cette capacité, ce moyen de charge étant inhibé en l'absence du premier signal de commande et en l'absence du deuxième signal de commande;
   - un troisième comparateur à seuil (COMP3) relié à la deuxième capacité pour établir un troisième signal de commande après une deuxième durée suivant le début de la charge de la deuxième capacité;
   - un moyen (T4, D1, D2, D3, R6, S1, S2) de limitation du courant de sortie de l'étage haute tension, recevant le premier et le troisième signal de commande et apte à limiter le courant à une première valeur en présence du premier signal de commande et à une deuxième valeur inférieure à la première en présence du troisième signal de commande.

2. Procédé de protection de poste téléphonique contre les surcharges caractérisé en ce qu'on limite le courant consommé par le poste à une première valeur pendant une premiere durée suivant le décrochage du combiné, puis à une deuxième valeur inférieure à la première après cette première durée, et enfin on limite le courant à une troisième valeur inférieure à la deuxième après une deuxième durée suivant soit la première durée si une surtension est apparue pendant la première durée, soit l'apparition d'une surtension si la première durée est déjà passée lors de cette apparition.

## Patentansprüche

1. Schutzschaltung für eine Fernsprechstelle zum Schutz eines von einer eine Hochspannungsstufe (EHT) querenden Fernsprechleitung gespeisten integrierten Schaltkreis (CI), **gekennzeichnet** durch

– eine erste Kapazität (C2) und eine erste Ladevorrichtung (R3) für diese Kapazität, wobei die Ladevorrichtung mit dem Ausgang der Hochspannungsstufe (EHT) zum Aufladen der Kapazität ab dem Auftreten einer Speisespannung am Ausgang der Hochspannungsstufe verbunden ist,

– einen mit der ersten Kapazität (C2) verbundenen ersten Schwellwert-Komparator (COMP1), der nach einem ersten auf das Auftreten einer Speisespannung am Ausgang der Hochspannungsstufe folgenden Zeitintervall ein erstes Steuersignal bildet,

– einen zweiten Schwellwert-Komparator (COMP2), der das Auftreten einer Überspannung an den Anschlüssen der Hochspannungsstufe erkennt und darauf ein zweites Steuersignal ausgibt,

– eine zweite Kapazität (C3) und eine Ladevorrichtung (SC1) für diese Kapazität, wobei die Ladevorrichtung bei Fehlen des ersten Steuersignals und des zweiten Steuersignals gesperrt ist,

– einen mit der zweiten Kapazität verbundenen dritten Schwellwert-Komparator (COMP3), der nach einem zweiten auf den Beginn des Aufladens der zweiten Kapazität folgenden Zeitintervall ein drittes Steuersignal bildet, und

– eine Vorrichtung (T4, D1, D2, D3, R6, S1, S2) zur Begrenzung des Ausgangsstromes der Hochspannungsstufe, die das erste und das dritte Steuersignal empfängt und geeignet ist, den Strom beim Auftreten des ersten Steuersignals auf einen ersten Wert und beim Auftreten des dritten Steuersignals auf einen zweiten, geringeren Wert zu begrenzen.

2. Verfahren zum Schutz einer Fernsprechstelle, dadurch **gekennzeichnet**, daß der Versorgungsstrom für die Fernsprechstelle während eines ersten Zeitintervalls nach dem Auflegen des Fernsprechgerätes auf einen ersten Wert begrenzt wird, nach Ablauf des ersten Zeitintervalls auf einen zweiten, geringeren Wert und schließlich nach einem zweiten Zeitintervall auf einen nochmals geringeren Wert als den zweiten Wert begrenzt wird, wobei das zweite Zeitintervall entweder dem ersten Zeitintervall folgt, wenn während des ersten Zeitintervalls eine Überspannung aufgetreten ist, oder dem Auftreten einer Überspannung folgt, wenn beim Auftreten der Überspannung das erste Zeitintervall bereits verstrichen ist.

phone line through a high-voltage stage (EHT), characterized in that it comprises:

– a first capacitor (C2) and a charging means (R3) of this capacitor, this means being connected with the output of the high-voltage stage (EHT) for charging the capacitor from the occurence of a voltage at the output of the high-voltage stage;

– a first threshold comparator (COMP1) connected with the first capacitor (C2) for establishing a first control signal after a first time period following said occurence of a feeding voltage at the output of the high-voltage stage;

– a second threshold comparator (COMP2) for detecting the occurence of an overvoltage through the terminals of the high-voltage stage and for then supplying a second control signal;

– a second capacitor (C3) and means (SC1) for charging this capacitor, said charging means being inhibited in the absence of the first control signal and of the second control signal;

– a third threshold comparator (COMP3) connected with the second capacitor for establishing a third control signal after a second time period following the beginning of the changing of the second capacitor;

– means (T4, D1, D2, D3, R6, S1, S2) for limiting the output current of the high-voltage stage, receiving the first and third control signal and adapted to limit the current to a first value during the first control signal ant to a second value lower than the first one during the third control signal.

2. An overvoltage protection method for telephone sets, characterized in that the current used by the set is limited to a first value during a first time period following the hooking off of the handset, then to a second value lower than the first one after this first period, and finally the current is limited to a third value lower than the second one after a second period following either the first period if an overvoltage has occurred during the first period, or the occurrence of an overvoltage if the first period has already been completed before this occurrence.

## Claims

1. A protection circuit for telephone sets, for the protection of an integrated circuit (CI) fed by a tele-

FIG.1

EP 0 294 303 B1

FIG.2

EP 0 294 303 B1

FIG.3